# EUROPEAN PATENT APPLICATION

(11) **EP 4 383 765 A1**
(43) Date of publication of application: **12.06.2024**
(21) Application number: 22212138.6
(22) Date of filing: 08.12.2022
(51) Int. Cl.: H04W 4/50, H04L 41/0895, H04L 41/50, H04L 67/12, H04W 28/16

(54) **METHOD TO OPERATE A CROSS COMMUNICATION DOMAIN SYSTEM, WIRELESS COMMUNICATION SYSTEM AND CROSS COMMUNICATION DOMAIN SYSTEM**

(71) Applicant: Siemens Aktiengesellschaft, 80333 München (DE)
(72) Inventor: Schenk, Jochen, 76764 Rheinzabern (DE); Zeiger, Florian, 85635 Höhenkirchen-Siegertsbrunn (DE)
(74) Representative: Siemens Patent Attorneys

(57) **Abstract**

The invention is concerned with a method to operate a cross communication domain system (1) comprising the steps of: receiving an industrial service intent (9), comprising service requirements (7) of an industrial service (5) of an industrial application (4) regarding the cross communication domain system (1) by an industrial service intent handling device (10); determining network requirements (8) related to the wireless system (6) based on the industrial service intent (9) and the wireless system parameters (11) of the wireless system (6) by the industrial service intent handling device (10), providing the network requirements (8) to a service network function factory (13) of the wireless communication system (2) by the industrial service intent handling device (10), based on the network requirements (8), initializing a service virtual network function (18) to provide the network requirements (8) to the industrial service (5) to use the wireless communication system (2).

## Description

Independent of the grammatical term usage, individuals with male, female or other gender identities are included within the term.

The invention is related to a method to operate a cross communication domain system, a wireless communication system and a cross communication domain system.

Use of wireless communication technologies in industrial setups are a must have for future Industry 4.0 and Industrial Internet of Things (IIoT) use cases as the required mobility, flexibility and dynamicity can be addressed. Nevertheless, for enabling wireless technologies, industry-grade resource management is required. The resource management may be related to a defined access to radio frequencies and/or an industrial Quality of Service (QoS) on the radio link. A key challenge for current wireless systems like 5G-systems or WiFi6-systems and future wireless systems like 6G-systems is a support of industrial service quality from an end-to-end perspective. In this context, end-to-end may refer to a connection from an application end point of an industrial application to another application end point of another industrial application. Therefore, a mechanism is needed, that allows a capturing of QoS-requirements of the respective industrial applications, a translation of these QoS-requirements to system capabilities of the wireless communication system, a creation of appropriate configuration settings for the wireless system and a deploying of configuration changes and seamlessly integration of services in an overall cross communication domain system, comprising wireless and wired information technology (IT) and operation technology (OT).

Currently there is no efficient end-to-end resource allocation across multiple communication domains in cross communication domain systems.

Current implementations address static configuration deploy-ments, wherein service resource requirements, describing data flows with defined Quality of Service (QoS), are manually arranged by a network administrator through pre-configuration of micro slices.

An example of such an approach is described in US 11,284,288 B2. The said document discloses a method and an apparatus for defining and administering micro slices by a network administrator in an enterprise network. The micro slices provide an end-to-end logical network through multiple networks, which allows a network administrator to efficiently arrange data flows in the enterprise network with a defined Quality of Service (QoS).

It is an object of the invention to enable an efficient end-to-end resource allocation across multiple communication domains .

This objective is achieved by the respective subject matter of the independent claims. Further implementations and preferred embodiments are subject matter of the dependent claims.

A first aspect of the invention is related to a method to operate a cross communication domain systems.

The method comprises a step of receiving an industrial service intent by an industrial service intent handling device of a wireless communication system of the cross communication domain system.

The wireless communication system may comprise a hypervisor operated on a computing device. At least one virtual machine and/or at least one virtual container are operated by the hypervisor, wherein virtual network functions may be operated in the at least one virtual machine and/or the at least one virtual container to provide respective network functions and/or network services of the wireless communication system. The network functions may comprise directory services, routing services, interface services, filter services, firewall services and/or balancing services. The wireless communication system may comprise a wireless system like a 4G system, a 5G system, a 6G system, a wifi system, a Bluetooth system or any other wireless communication system.

The industrial service intent comprises service requirements of an industrial service regarding the cross communication domain system. The industrial service intent may be provided by an industrial application of an industrial network of the cross communication domain system in order to provide the industrial service in the cross communication domain system. The industrial service intent may comprise the service requirements like a periodic communication with a bounded latency.

In a next step network requirements related to the wireless system of the wireless communication system are determined by the industrial service intent handling device based on the industrial service intent and wireless system parameters of the wireless system. The wireless system parameters may comprise supported functionalities of the wireless system, a resource usage of the wireless system and further key performance indicators of the wireless system. The network requirements may comprise required key performance indicators of the wireless system and required functionalities of the wireless system needed to serve the service requirements.

The network requirements are provided to a service network function factory of the wireless communication system by the industrial service intent handling device.

Based on the network requirements, a service virtual network function is initialized by the service network function factory to provide the network requirements to the industrial service to use the wireless communication system. The service virtual network function may be provided according to the required functionalities of the network requirements.

The idea behind the service virtual network function is to provide the network functions and/or the network services to fulfil the network requirements necessary for the industrial service. The service virtual network function may provide an interface to the industrial application to provide the respective industrial service. The service virtual network function may be configured as a user plane function (UPF) for example.

Based on the network requirements, a QoS-profile is provided to the wireless network by the service network function factory to provide the network requirements in the wireless system. The QoS-profile may be provided according to the required key performance indicators (KPIs) of the network requirements. Network resources of the wireless system are allocated according to the QoS-profile by the wireless system. The allocation may comprise a creation of a QoS-flow according to the QoS-profile.

The service virtual network function may be configured as a user plane function (UPF) for the industrial application. The application may send service data and/or receive service data of the industrial service of the industrial application via the user plane function. The user plane function may be configured to map the service data to the QoS-flow, generated according to the QoS-profile.

The invention allows an efficient end-to-end resource allocation across multiple communication domains. Wireless and wired communication systems can be seamlessly integrated using a service network function factory, so that end-to-end industrial QoS can be provided dynamically.

According to a further embodiment of the invention, the step of initializing the service virtual network function comprises a comparison of network requirements of available service virtual network functions provided by a virtual network function repository with the network requirements. The step further comprises a selection of an available service virtual network function providing the network requirements as the service virtual network function.

According to a further embodiment of the invention, the step of initializing the service virtual network function comprises a fetching of a virtual network function template provided by the virtual network function repository for generating the service virtual network function by the service network function factory. The step further comprises a generation of the service virtual network function based on the virtual network function template, depending on the network requirements to provide the network requirements.

According to a further embodiment of the invention, the step of selecting the QoS-profile according to the network requirements comprises a comparison of network requirements of available QoS-profiles provided by the wireless system with the network requirements by the service network function factory. The step further comprises a determination of an available QoS-profile providing the network requirements as the QoS-profile.

According to a further embodiment of the invention, the step of selecting the QoS-profile according to the network requirements comprises a triggering of the wireless system to create the QoS-profile according to the network requirements by the service network function factory.

According to a further embodiment of the invention, the method comprises a step of monitoring a usage of radio resources of the wireless system by a monitoring system of the wireless communication system. The method further comprises an evaluation of the wireless system parameters describing capabilities of the wireless system of the wireless communication system based on the usage of the radio resources. The method further comprises a sending of the wireless system parameters to the industrial service intent handling device of the wireless communication system and a reception of the wireless system parameters by the industrial service intent handling device of the wireless communication system.

According to a further embodiment of the invention, the method comprises the step of sending the industrial service intent, comprising the network requirements for the industrial service using the wireless system to the industrial service intent handling device of the wireless communication system by the industrial application of the industrial network.

According to a further embodiment of the invention, the wireless system complies with 5G standard. In other words, the wireless system is designed as a 5G wireless system.

According to a further embodiment of the invention, the method comprises the step of determining that the service requirements cannot be met by the wireless system parameters by the industrial service intent handling device. In other words, the industrial service intent handling device evaluates that the wireless system parameters do not allow a fulfilment of the service requirements. It may be possible, that a requested bandwidth, requested by the service requirements cannot be provided.

The industrial service intent handling evaluates proposed network requirements related to the wireless system of the wireless communication system based on the industrial service intent and the wireless system wireless system parameters of the wireless system by the industrial service intent handling device. It may be possible that a lower bandwidth may be provided by the wireless system, wherein the lower bandwidth may not fulfil the service requirements. The proposed network requirements may comprise the lower bandwidth. The industrial service intent handling device sends the proposed network requirements to the industrial application. The industrial service intent handling sends the proposed network requirements to the industrial application to inquire whether the proposed requirements are sufficient for the industrial application. The industrial application sends an acknowledgement to the industrial service intent handling device in case the proposed network requirements are sufficient to provide the industrial service. The industrial service intent handling device receives the acknowledgement to the proposed network requirements by the industrial service intent handling device. The industrial service intent handling device declares the proposed network requirements as the network requirements. In other words, the proposed network requirements may be used as the network requirements even if they do not comply with the service requirements of the industrial service intend.

A second aspect of the invention is related to a wireless communication system. The wireless communication system comprises an industrial service intent handling device. The industrial service intent handling device is configured to receive an industrial service intent, comprising service requirements of an industrial service of an industrial application regarding the cross communication domain system, to determine network requirements related to a wireless system of the wireless communication system based on the industrial service intent and wireless system parameters of the wireless system, and to provide the network requirements to a service network function factory of the wireless communication system.

The service network function factory is configured to initialize a service virtual network function to provide the network requirements to the industrial service to use the wireless communication system, based on the network requirements, to provide a QoS-profile based on the network requirements to the wireless system according to the network requirements, and to allocate available resources of the wireless system according to the QoS-profile for the industrial service using the wireless communication system in the wireless system.

A third aspect of the invention is related to a cross communication domain system comprising at least one wireless communication system and at least one industrial network.

The industrial application, the system status monitoring system, the industrial service intent handling device, the service network function factory and the network function repository may be designed as modules of the cross communication domain system.

Here and in the following, a module can be understood as a hardware module or as a software module. In particular, a module may also comprise a hardware and a software portion implemented on the hardware.

A software module may be understood as a portion of software code functionally connected and combined to a computing unit. A software module may comprise or implement several processing steps and/or data structures. A method step of providing a software module may be understood to comprise providing a respective software code in a computer readable fashion on a computer readable storage medium.

A computing unit may in particular be understood as a data processing device, which comprises processing circuitry. The computing unit may therefore in particular process data to perform computing operations. This may also include operations to perform indexed accesses to a data structure, for example a look-up table, LUT.

In particular, the computing unit may include one or more computers, one or more microcontrollers, and/or one or more integrated circuits, for example, one or more application-specific integrated circuits, ASIC, one or more field-programmable gate arrays, FPGA, and/or one or more systems on a chip, SoC. The computing unit may also include one or more processors, for example one or more microprocessors, one or more central processing units, CPU, one or more graphics processing units, GPU, and/or one or more signal processors, in particular one or more digital signal processors, DSP. The computing unit may also include a physical or a virtual cluster of computers or other of said units.

In various embodiments, the computing unit includes one or more hardware and/or software interfaces and/or one or more memory units.

A memory unit may be implemented as a volatile data memory, for example a dynamic random access memory, DRAM, or a static random access memory, SRAM, or as a non-volatile data memory, for example a read-only memory, ROM, a programmable read-only memory, PROM, an erasable read-only memory, EPROM, an electrically erasable read-only memory, EEPROM, a flash memory or flash EEPROM, a ferroelectric random access memory, FRAM, a magnetoresistive random access memory, MRAM, or a phase-change random access memory, PCRAM.

A fourth aspect of the invention is related to a computer program comprising instructions which, when the program is executed by a computing hardware device, cause the computing hardware device to carry out the method according to the first aspect of the invention.

The computer program is related to the steps, performed by the wireless communication system and/or the computer program is related to the steps, performed by the industrial network.

A fifth aspect of the invention is related to a computer-readable medium comprising instruction which, when executed by a computing hardware device, cause the computing hardware device to carry out the method according to the first aspect of the invention.

Further implementations of the computing hardware device according to the second aspect of the invention, computer program according to the third aspect of the invention and the computer-readable medium according to the fourth aspect of the invention, follow directly from the various embodiments of the method according to the first aspect of the invention and vice versa. In particular, individual features and corresponding explanations relating to the various implementations of the method according to the first aspect of the invention can be transferred analogously to corresponding implementations of the computing hardware device according to the second aspect of the invention, computer program according to the third aspect of the invention and the computer-readable medium according to the fourth aspect of the invention. In particular, the computing hardware device according to the second aspect of the invention is designed or programmed to carry out the method according to the first aspect of the invention or carries out the method according to the first aspect of the invention.

If it is mentioned in the present disclosure that the computing hardware device according to the second aspect of the invention, computer program according to the third aspect of the invention and the computer-readable medium according to the fourth aspect of the invention, are adapted, configured or designed to, et cetera, to perform or realize a certain function, to achieve a certain effect or to serve a certain purpose, this can be understood such that the component, beyond being usable or suitable for this function, effect or purpose in principle or theoretically, is concretely and actually capable of executing or realizing the function, achieving the effect or serving the purpose by a corresponding adaptation, programming, physical design and so on.

The computer program as well as the computer-readable storage medium may be denoted as respective computer program products comprising the instructions.

A computing hardware device may in particular be understood as a data processing device, which comprises processing circuitry. The computing unit can therefore in particular process data to perform computing operations. This may also include operations to perform indexed accesses to a data structure, for example a look-up table, LUT.

In particular, the computing hardware device may include one or more computers, one or more microcontrollers, and/or one or more integrated circuits, for example, one or more application-specific integrated circuits, ASIC, one or more field-programmable gate arrays, FPGA, and/or one or more systems on a chip, SoC. The computing unit may also include one or more processors, for example one or more microprocessors, one or more central processing units, CPU, one or more graphics processing units, GPU, and/or one or more signal processors, in particular one or more digital signal processors, DSP. The computing unit may also include a physical or a virtual cluster of computers or other of said units.

In various embodiments, the computing hardware device includes one or more hardware and/or software interfaces and/or one or more memory units.

A memory unit may be implemented as a volatile data memory, for example a dynamic random access memory, DRAM, or a static random access memory, SRAM, or as a non-volatile data memory, for example a read-only memory, ROM, a programmable read-only memory, PROM, an erasable read-only memory, EPROM, an electrically erasable read-only memory, EEPROM, a flash memory or flash EEPROM, a ferroelectric random access memory, FRAM, a magnetoresistive random access memory, MRAM, or a phase-change random access memory, PCRAM.

Further features of the invention are apparent from the claims, the figures and the figure description. The features and combinations of features mentioned above in the description as well as the features and combinations of features mentioned below in the description of figures and/or shown in the figures may be comprised by the invention not only in the respective combination stated, but also in other combinations. In particular, embodiments and combinations of features, which do not have all the features of an originally formulated claim, are also comprised by the invention. Moreover, embodiments and combinations of features which go beyond or deviate from the combinations of features set forth in the recitations of the claims are comprised by the invention.

In the following, the invention will be explained in detail with reference to specific exemplary implementations and respective schematic drawings. In the drawings, identical or functionally identical elements may be denoted by the same reference signs. The description of identical or functionally identical elements is not necessarily repeated with respect to different figures.

In the figures,
- FIG 1: shows a schematic illustration of a system comprising a wireless communication system and an industrial network; and
- FIG 2: shows a schematic illustration of a method to operate the system.

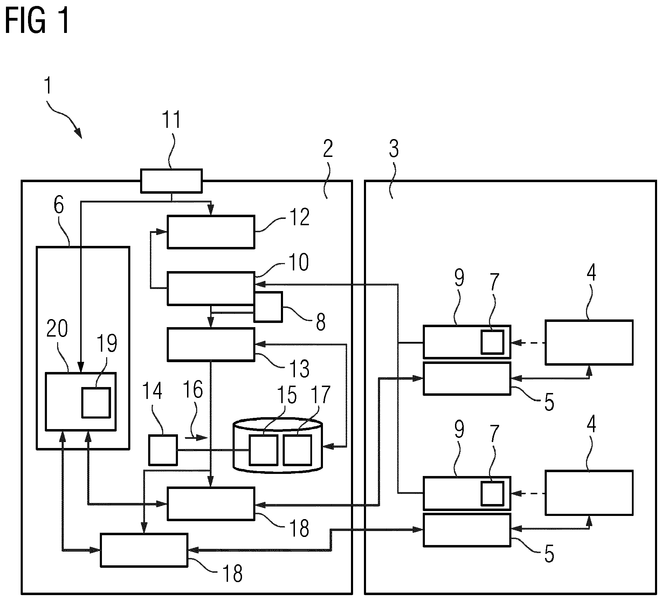

FIG 1 shows a schematic illustration of a cross communication domain system 1 comprising a wireless communication system 2 and an industrial network 3. The wireless communication system 2 and the industrial network 3 may be different communication domains.

FIG 1 shows the two communication domains - the wireless communication system 2 and the industrial network 3 with their main components and interactions which are explained in the following.

The industrial network 3 may be configured as a wired network. The industrial network 3 may comprise industrial applications 4 that may be configured to provide industrial services 5. The industrial applications 4 may be modules, robots, industrial devices or computer devices of the industrial network 3. In order to provide the industrial services 5 by the industrial applications 4 via the two different communication domains it may be necessary to provide service virtual network functions 18 by the wireless communication system 2. However it may also be possible, that the the industrial services 5 are provided by the industrial applications 4 via more than the two different communication domains 2. The service virtual network functions 18 may be configured according to the required network functions as requested in the industrial service intend 9. It may be necessary to provide key performance indicators required by the industrial service 5 in a wireless system 6 of the wireless communication system 2.

In order to request the required key performance indicators and the required network functions from the wireless communication system 2, the industrial application 4 may be configured to send an industrial service intent 9 to an industrial service intent handling device 10 of the wireless communication system 2. The industrial service intent 9 may comprise service requirements 7 to provide the industrial service 5 in the wireless system 6. The service requirements 7 may comprise the required network functions and the required key performance indicators. The service requirements 7 may be independent of the technology of the wireless communication system 2. In other words, the KPIs and the network functions included in the service requirements 9 may not be directed to a specific technology of the wireless communication system 2 or the wireless system 6, but may be directed to wireless communication systems 2 of different technologies.

The industrial service intent handling device 10 may be configured to evaluate network requirements 8 like network functions and key performance indicators, that have to be provided by the wireless communication system 2 in order to provide the industrial service 5. The evaluation may be based on the service requirements 7 of the industrial service intent 9 and on wireless system parameters 11 of the wireless system 6. The wireless system parameters 11 may be provided by a system status monitoring system 12, configured to monitor the wireless system 6. In other words, the industrial service intent handling device 10 may be configured as a translator to translate the service requirements 9 into the network requirements 8 that are matched to the wireless communication system's 2 characteristics and capabilities.

The industrial service intent handling device 10 may be configured to send the evaluated network requirements 8 that may comprise evaluated key performance indicators and/or necessary network functions to a service virtual network function factory 13 of the wireless communication system 2.

The service virtual network function factory 13 may be configured to initiate at least one service virtual network function 18 according to the network requirements 8 to provide the required network functions. The service virtual network function factory 13 may be configured to compare network requirements 14 provided by available service virtual network functions 15 stored in a network function repository 16 with the evaluated network requirements 8. In case the network requirements 8 are provided by an available service virtual network function 18, the respective available service virtual network function 15 is configured and initiated by the network function factory 13 in the wireless communication system 2.

The service virtual network function factory 13 may be configured to fetch a virtual network function template 17 for creating the service virtual network function 18 from the network function repository 16 in case the evaluated network requirements 8 are not provided by the available virtual network functions 15 of the network function repository 16. The service virtual network function factory 13 may be configured to create the service virtual network function 18 according to the network requirements 8 and to initiate the created service virtual network functions 18 in the wireless communication system 2.

The service virtual network function factory 13 may be configured to compare the network requirements 8 of QoS-profiles 19 provided by the wireless system 6. In case one of the QoS-profiles 19 provides the network requirements 8, the service virtual network function factory 13 may configure the respective QoS-profile 19 of the wireless system 6. The network function factory 13 may be configured to trigger the wireless system 6 to allocate radio resources 20 of the wireless system 6 according to the QoS-profile 19. The service virtual network function factory 13 may be configured to trigger a creation of a QoS-profile 19 according to the wireless system parameters 11 if no available QoS-profile 19 provides the wireless system parameters 11.

The wireless communication system 2 may be configured to deploy and to start a lifecycle of the service virtual network function 18 to provide the industrial service 5 of the industrial application 4 in the wireless system 6.

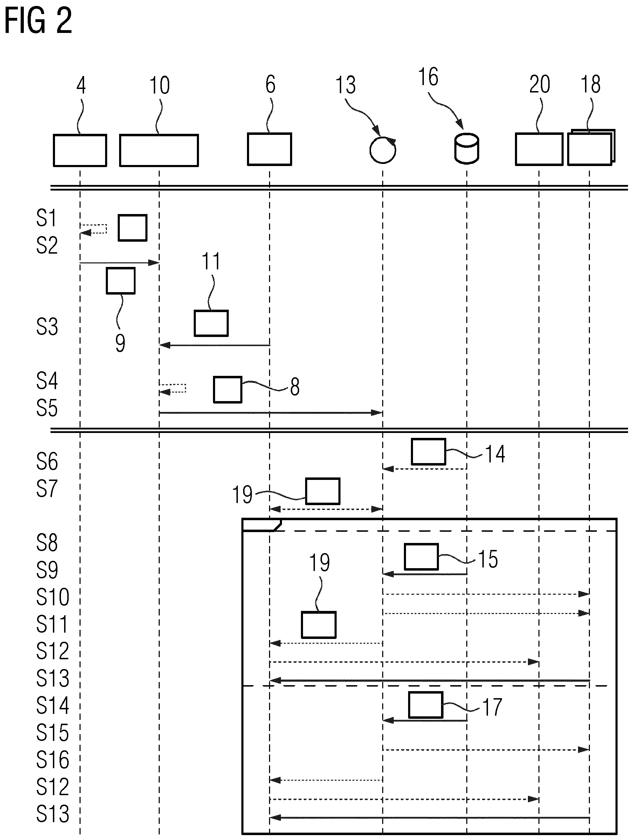

FIG 2 shows a schematic illustration of a method to operate the system.

The method may refer to the system, illustrated in FIG 1.

FIG 2 shows a sequence diagram and examples the main components' interaction.

In a step S1 the industrial application 4 may generate the industrial service intent 9 for the industrial service 5 of the industrial application 4. The industrial service intent 9 may comprise the service requirements 7.

In a step S2 the industrial service intent 9 may be transmitted to the industrial service intent handling 10 by the industrial application 4.

In a step S3 the wireless system 6 may transmit wireless system parameters 11 supported functionalities and key performance indicators to the industrial service intent handling device 10.

In a step S4 the industrial service intent handling device 10 may extract relevant key performance indicators and functions with respect to the underlying wireless system 6 as the network requirements 8. The extraction may be performed

In a step S5 the industrial service intent handling 10 may send the network requirements 8 like key performance indicators and functionalities to the service virtual network function factory 13.

In a step S6 the network requirements 14 of available virtual network functions 15 may be send from the network function repository 16 to the service virtual network function factory 13.

In a step S7 the service virtual network function factory 13 may receive network requirements 8 provided by the available QoS-profiles 19 of the wireless system 6. The QoS-profiles 19 may be linked to the respective available service virtual network functions 15. Therefore it may be necessary to evaluate the available service virtual network functions 15 with the respective QoS-profile 19 which fulfil the network requirements 8.

In case the available service virtual network function 15 according to the network requirements 8 provided by the network function repository 16 is found, the service virtual network function factory 13 may fetch the respective available virtual network function 15 from the network function repository 16 S8, initiate the service virtual network function 18 S9 and configure the service virtual network function 18 according to the network requirements 8 S10.

In a step S11 the service virtual network function factory 13 may configure the QoS-profiles 19 of the wireless system 6 according to the wireless system parameters 11.

In a step S12 the wireless system 6 may configure the radio resources 20 and corresponding interfaces according to the QoS-profile 19.

In a step S13 the wireless communication system 2 may deploy and start a lifecycle of the service virtual network function 18 in the wireless communication system 2.

In case the available service virtual network functions 15 provided by the network function repository 16 do provide network requirements 14 of available service virtual network functions 15 that do not fit the network requirements 8, the service virtual network function factory 13 may fetch a virtual network function template 17 in a step S14.

In a step S15 the network function repository 16 may create the service virtual network function 18 based on the virtual network function template 17 according to the network requirements 8.

In case the available QoS-profiles 19 provided by the wireless network do not provide the network requirements 8, the service virtual network function factory 13 may trigger a creation of the QoS-profile 19 according to the network requirements 8 in the wireless network S16.

The industrial applications 4 may be running in the context of the industrial network 3. In order to provide the industrial service 5 an application 4, or a proxy, issues the at least one industrial service intent 9 towards the industrial service intent handling device 10 component.

The industrial service intent 9 may comprise a set of service requirements 7, e.g., periodic communication with bounded latency.

The industrial service intent handling 10 may have access to the monitoring system 12 to get information about the wireless system 6 like wireless system parameters 11, supported functionalities, resource usage and further key performance indicators. Based on the industrial service intent 9 relevant network parameters key performance indicators and functions may be extracted and required network parameters like required key performance indicators and functionalities may be sent to the service virtual network function factory 13.

The service virtual network function factory 13 may use the information provided by the industrial service intent handling 10 and the existing virtual network function capabilities available in the network function repository 16. With this information the required service key performance indicators regarding the supported QoS-profiles may be checked against the wireless system 6.

If a matching is found the service virtual network function 18 may be initialized and configured. So is the correspondent QoS-profile 19 in the wireless system 6.

If no matching is found the required virtual network function templates 17 are received from the network function repository which are used by the service virtual network function factory 13 to create and to configure new service virtual network function 18.

Additionally, the wireless system 6 may be triggered to create the required QoS-profile 19 specific to the required service. This can be done by either using the mappings as foreseen in 3GPP TS 23.501: Section 5.27.3 Support for Time Sensitive Communication QoS Flows and 3GPP TS 23.501: Section 5.28.4 QoS mapping tables, or by service and radio system specific re- definition of slice parameters.

The service virtual network function 18 may be configured as an on-demand gateway as UPF. The service virtual network function 18 may be used to provide required communication capabilities to the industrial service 5 using the wireless system 6.

The network function repository may contain the already created service virtual network function 18 including network function functionality, relevant configurations, chains of functions, description of the function specific parameters e.g., in case of a function that can handle TSN traffic, the supported TSN configuration parameters / feedbacks are included. The repository may also contains meta information, such as quality measure of network function, their parameter settings, optionally also performance key performance indicators, and historical usage data.

The wireless system 6 may be configured as a 5G system. The wireless system 6 may be triggered by the service virtual network function factory 13 to create a QoS profile specific to the required service by configuring radio resources 20 e.g., slices and corresponding interfaces. Already created QoS profiles may be reused if requirements from further requests by the service virtual network function factory 13 can be matched.

After correspondent components are initialized and configured the service virtual network function 18 may be deployed in the wireless system 6 and its lifecycle may be started.

Information about the wireless system 6 like a usage of radio resource 20 may be provided to the monitoring system 12 and may be accessed by the industrial service intent handling 10. System status information or monitoring data may be available through an operation and management interface.

The radio resources 20 like slices may be configured by the service virtual network function factory 13 to provide a service specific QoS-profile 19 for the industrial service 5 and are later used by the service virtual network function 18.

The monitoring system 12 may collect information from the wireless system 6 like a usage of radio resources 20 and may provide them to other components like the industrial service intent handling 10. Data from the monitoring system 12 gives an overall status view and augments data retrieved from the wireless system 6 operation and management interface.

The proposed mechanism shows, how wireless and wired communication systems 2 can be seamlessly integrated using a service virtual network function factory 13, so that end-to-end industrial QoS can be provided dynamically e.g., supporting applications 4 with mobile endpoints.

The mechanism described in this invention disclosure allows efficient end-to-end resource allocation across multiple communication domains. Wireless and wired communication systems 2 can be seamlessly integrated using a service virtual network function factory 13, so that end-to-end industrial QoS can be provided dynamically.

Up to our knowledge, there is no mechanism available yet, that can dynamically process resource requests from applications 4 to setup industry-grade QoS in industrial communication systems 2 with wireless and wired communication technologies while supporting mobility of end points and multiservice/multi-tenant capabilities of the system.

The proposed mechanism allows capturing of industrial applications' 4 QoS requirements and their translation to system capabilities for different underlying communication technologies e.g., between the wired OT system/industrial network 3 and the wireless communication system 2 like a 5G campus network. Appropriate configuration settings for the wireless communication system 2 5G campus network are created and network functionalities in form of service virtual network functions 18 may be created during runtime e.g., UPFs, xApps, rApps in OpenRAN based 5G campus networks. This allows for a seamless service integration in the overall wireless and wired OT/IT system.

The proposed mechanism "translates" for example service requirements 7 of industrial service intents 9 to network requirements 8 communication requirements of slices and interconnects the industrial applications 4 through service virtual network functions, supporting dynamic service embedding scenarios which work across technologies.

## Claims

1. Method to operate a cross communication domain system (1) comprising the steps of:
- receiving an industrial service intent (9), comprising service requirements (7) of an industrial service (5) of an industrial application (4) regarding the cross communication domain system (1) by an industrial service intent handling device (10) of a wireless communication system (2) of the cross communication domain system (1);
- receiving wireless system parameters (11) describing capabilities of the wireless system (6) of the wireless communication system (2) by the industrial service intent handling device (10) of the wireless communication system (2);
- determining network requirements (8) related to the wireless system (6) of the wireless communication system (2) based on the industrial service intent (9) and the wireless system parameters (11) of the wireless system (6) by the industrial service intent handling device (10) ;
- providing the network requirements (8) to a service network function factory (13) of the wireless communication system (2) by the industrial service intent handling device (10);
- based on the network requirements (8), initializing a service virtual network function (18) to provide the network requirements (8) to the industrial service (5) to use the wireless communication system (2);
- based on the network requirements (8), providing a QoS-profile (19) and/or a connectivity to the wireless system (6) according to the network requirements (8); and
- allocating available radio resources (20) of the wireless system (6) according to the QoS-profile (19) for the industrial service (5) using the wireless communication system (2).

2. Method according to claim 1, wherein the step of initializing the service virtual network function (18) comprises:
- comparing network requirements (8) of available service virtual network functions (18) provided by a virtual network function repository (16) with the network requirements (8); and
- selecting an available service virtual network function (18) providing the network requirements (8) as the service virtual network function (18).

3. Method according to claim 1 or 2, wherein the step of initializing the service virtual network function (18) comprises:
- fetching a virtual network function template (17) for creating the service virtual network function (18), provided by the virtual network function repository (16); and
- generating the service virtual network function (18) by the service network function factory (13) based on the virtual network function template (17) depending on the network requirements (8) to provide the network requirements (8).

4. Method according to one of the preceding claims, wherein the step of selecting the QoS-profile (19) according to network requirements (8) comprises:
- comparing network requirements (8) of available QoS-profiles (19) provided by the wireless system (6) with the network requirements (8) by the service network function factory (13); and
- determining and parameterizing an available QoS-profile (19) providing the network requirements (8) as the QoS-profile (19).

5. Method according to one of the preceding claims, wherein the step of selecting the at least one QoS-profile (19) according to the network requirements (8) comprises:
- triggering the wireless system (6) to create the QoS-profile (19) according to the network requirements (8) by the service network function factory (13).

6. Method according to one of the preceding claims comprising the steps of:
- monitoring usage of radio resources (20) of the wireless system (6) by a monitoring system (12) of the wireless communication system (2);
- evaluating the wireless system parameters(11) describing capabilities of the wireless system (6) of the wireless communication system (2) based on the usage of the radio resources (20); and
- sending the wireless system parameters (11) to the industrial service intent handling device (10) of the wireless communication system (2).

7. Method according to one of the preceding claims comprising the step of:
- sending an industrial service intent (9), comprising required communication capabilities for an industrial service (5) using a wireless system (6), by the industrial application (4) of the industrial network (3) to the industrial service intent handling device (10) of the wireless communication system (2).

8. Method according to one of the preceding claims, wherein the wireless system (6) complies with 5G standard.

9. Method according to one of the preceding claims comprising the step of:
- determining that the service requirements (7) cannot be met by the wireless system parameters (11) by the industrial service intent handling device (10);
- evaluating proposed network requirements related to the wireless system (6) of the wireless communication system (2) based on the industrial service intent (9) and the wireless system wireless system parameters (11) of the wireless system (6) by the industrial service intent handling device (10);
- sending the proposed network requirements to the industrial application by the industrial service intent handling device (10);
- receiving an acknowledgement to the proposed network requirements by the industrial service intent handling device (10); and
- declaring the proposed network requirements (8) as the network requirements by the industrial service intent handling device (10).

10. Wireless communication system (2) comprising an industrial service intent handling device (10), wherein the industrial service intent handling device (10) is configured to:
- receive an industrial service intent (9), comprising service requirements (7) of an industrial service (5) of an industrial application (4) regarding the cross communication domain system (1);
- determine network requirements (8) related to a wireless system (6) of the wireless communication system (2) based on the industrial service intent (9) and the wireless system parameters (11) of the wireless system (6);
- Provide the network requirements (8) to a service network function factory (13) of the wireless communication system (2);
wherein the service network function factory (13) is configured to:
- initialize a service virtual network function (18) to provide the network requirements (8) to the industrial service (5) to use the wireless communication system (2), based on the network requirements (8);
- provide a QoS-profile (19) and/or a connectivity based on the network requirements (8), to the wireless system (6) according to the network requirements (8); and
- allocate available radio resources (20) of the wireless system (6) according to the QoS-profile (19) for the industrial service (5) using the wireless communication system (2) in the wireless system (6).

11. Cross communication domain system (1) comprising at least one wireless communication system (2) according to claim 10 and at least one industrial network (3).

12. Computer program comprising instructions which, when the program is executed by a computing hardware device, cause the computing hardware device to carry out the method of one of the claims 1 to 9.

13. Computer-readable medium comprising the computer program, of claim 12.
